# EUROPÄISCHE PATENTANMELDUNG

(11) **EP 4 407 858 A1**
(43) Veröffentlichungstag der Anmeldung: **31.07.2024**
(21) Anmeldenummer: 23153180.7
(22) Anmeldetag: 25.01.2023
(51) Int. Cl.: H02M 7/5395, H02M 5/458, H02M 1/12, H02M 1/44, H02M 1/00

(54) **STROMRICHTERANORDNUNG**

(71) Anmelder: Siemens Aktiengesellschaft, 80333 München (DE)
(72) Erfinder: Krupp, Henrik, 91056 Erlangen (DE); Mondal, Gopal, 91058 Erlangen (DE); Nielebock, Sebastian, 91301 Forchheim (DE)
(74) Vertreter: Siemens Patent Attorneys

(57) **Zusammenfassung**

Es wird Anordnung mit einem Stromrichter und einem Gleichtakt-Netzfilter mit einer Filterdrossel angegeben, bei der eine zusätzliche Wicklung auf der Filterdrossel ein Messsignal für Gleichtaktstörungen bereitstellt und eine Steuereinrichtung Schalthandlungen der Halbleiterschalter des Stromrichters so beeinflusst, dass Gleichtaktstörungen mit Frequenzen von weniger als der Hälfte der Schaltfrequenz der Halbleiterschalter verringert werden.

## Beschreibung

Die Erfindung betrifft eine Stromrichteranordnung mit ersten und zweiten elektrischen Anschlüssen, einer Mehrzahl von Halbleiterschaltern, die ein Netzwerk bilden, wobei das Netzwerk zwischen die Eingangsanschlüsse und die Ausgangsanschlüsse geschaltet ist, einer Steuereinrichtung, ausgestaltet zur Erzeugung von Schaltsignalen mit einer Schaltfrequenz für die Halbleiterschalter, wobei die Schaltsignale einen Betrieb als Stromrichter bewirken und einem zwischen die ersten Anschlüsse und das Netzwerk geschalteten Gleichtaktfilter mit einer Filterdrossel, die eine Mehrzahl von Wicklungen umfasst.

In aktuellen leistungselektronischen Anlagen werden zunehmend Stromrichter zur Wandlung zwischen Gleichspannung und Wechselspannung auf der Netzseite eingesetzt, um entweder Leistung in das Stromnetz einzuspeisen oder als aktive Gleichrichter zu arbeiten. Ein solcher als aktiver Gleichrichter arbeitender Stromrichter speist häufig einen oder mehrere beliebige Verbraucher, die häufig selbst über eine eigene, aktiv schaltende, Leistungselektronik verfügen.

Zur Einhaltung der durch Normen festgelegten Spannungspegel für Gegentaktstörungen (auch als engl. differential mode noise oder DM-Störungen bezeichnet) und Gleichtaktstörungen (auch als engl. common mode noise oder CM-Störungen bezeichnet) ist es bekannt, zwischen den Anschluss an das Versorgungsnetz und die Leistungsstufe des Wechselrichters ein passives Filter zur Reduzierung der Gegentakt- und Gleichtakt-Störanteile zu schalten.

Der für die Gleichtakt-Anteile zuständige Teil des Netzfilters beinhaltet in der einfachsten Ausführung eine Gleichtakt-Drossel und eine Gleichtakt-Kondensatorstufe. In komplexeren Ausführungen solcher Netzfilter sind mehrere solche Filterstufen hintereinandergeschaltet.

Die von dem passiven Netzfilter zu reduzierenden Gegentakt-Störanteile werden ausschließlich vom Stromrichter selbst erzeugt. Die Gegentakt-Störanteile sind daher bei der Konstruktion des Stromrichters bekannt und der Gegentakt-Teil des Netzfilters kann passend ausgelegt werden.

Dagegen setzen sich die vorkommenden Gleichtakt-Störanteile aus denen des Stromrichters und den von den Verbrauchern erzeugten Anteilen zusammen. Bei der Auslegung des Gleichtakt-Teils des Netzfilters sind daher die von den Verbrauchern kommenden Störanteile zu berücksichtigen, können sehr häufig aber nur geschätzt werden, da die Verbraucher beispielsweise von Fremdherstellern stammen können und ihre Eigenschaften oft unbekannt sind. Erschwerend kommt hinzu, dass die von den Verbrauchern erzeugten Gleichtakt-Störanteile deutlich stärker sein können als die des Stromrichters selbst.

Da das Bindeglied zwischen Netzseite und Verbraucher, also hier der Stromrichter, für die Einhaltung der durch die Norm festgelegten Störpegel verantwortlich ist, muss der Gleichtakt-Teil des passiven Netzfilters in der Lage sein, die Summe aller Gleichtakt-Störanteile hinreichend gut zu unterdrücken, also in allen Betriebsfällen die Gleichtakt-Störanteile unter die von der Norm vorgegebenen Grenzwerte zu reduzieren. Um das sicherzustellen, werden für den Gleichtakt-Teil des Netzfilters oft sehr niedrige Grenzfrequenzen von weniger als 5 kHz gewählt, was zu stark erhöhten Kosten, elektrischen Verlusten und vergrößertem Volumen des Netzfilters führt. Nachteilig ist, dass die so ausgelegten Gleichtakt-Filter für die meisten Anwendungsfälle überdimensioniert sind.

Auch ist bekannt, dem Netzfilter eine aktive Elektronik zuzufügen. Diese umfasst eine Messschaltung und eine Leistungsstufe. Die Messschaltung erfasst Störanteile und steuert die Leistungsstufe so an, dass Gegensignale eingeprägt werden, die den Störanteilen (sowohl den Gegentakt- als auch den Gleichtakt-Störanteilen) entgegenwirken. Damit können die passiven Komponenten im Netzfilter häufig volumentechnisch kleiner ausgelegt werden. Nachteilig ist, dass eine solche Filterschaltung überwacht werden muss, um sicherzustellen, dass ein Ausfall der Filterschaltung nicht unentdeckt bleibt und der Verbund aus Stromrichter und Verbrauchern hohe Störpegel in das Stromnetz abgibt, die unerkannt bleiben und zum Ausfall von parallel am Netz betriebenen Verbrauchern führen können.

Es ist Aufgabe der Erfindung, eine Stromrichteranordnung anzugeben, die die eingangs genannten Nachteile überwindet.

Diese Aufgabe wird durch eine Stromrichteranordnung mit den in Anspruch 1 angegebenen Merkmalen gelöst.

Der erfindungsgemäße Stromrichter umfasst eine Mehrzahl von Halbleiterschaltern, die ein Netzwerk bilden und eine Steuereinrichtung, ausgestaltet zur Erzeugung von Schaltsignalen mit einer Schaltfrequenz für die Halbleiterschalter, wobei die Schaltsignale einen Betrieb des Netzwerks als Stromrichter bewirken. Der Stromrichter umfasst weiterhin ein mit dem Netzwerk verbundenes Netzfilter zur Filterung von Gleichtakt-Störungen mit einer Filterdrossel, wobei die Filterdrossel eine Mehrzahl von in den Laststrompfad geschalteten Wicklungen und eine Messwicklung umfasst.

Die Steuereinrichtung ist ferner ausgestaltet, ein Messsignal von der Messwicklung aufzunehmen, wobei das Messsignal ein Maß für Gleichtakt-Störungen ist und die Schaltsignale für die Halbleiterschalter derart zu erzeugen, dass Gleichtakt-Störungen mit einer Frequenz von weniger als der Hälfte der Schaltfrequenz vermindert werden.

Die Stromrichteranordnung umfasst also mit anderen Worten einen Stromrichter, der im Betrieb ein Wechselrichter oder aktiver Gleichrichter sein kann oder auch beides je nach Betriebssituation. Die Stromrichteranordnung umfasst weiterhin ein Netzfilter, das zumindest ein Gleichtaktfilter umfasst, aber zusätzlich auch ein Gegentaktfilter umfassen kann.

Die Halbleiterschalter können beispielsweise IGBTs oder MOSFETs sein. Neben bekannten siliziumbasierten Schaltern können die Halbleiterschalter auch SiC-basiert oder GaN-basiert sein. SiC- und GaN-basierte Schalter zeichnen sich unter anderem dadurch aus, dass mit ihnen deutlich höhere Schaltfrequenzen im Betrieb realisierbar sind. Das Netzwerk der Halbleiterschalter kann in einem einfachen Fall eine Schaltung aus drei parallel geschalteten Halbbrücken zu je zwei der Halbleiterschalter sein. Es kann sich aber auch um andere zwei- oder mehr-Level-Topologien handeln. Die von der Steuereinrichtung erzeugten Schaltsignale betreiben die Halbleiterschalter beispielsweise mit einer Pulsweitenmodulation, um eine Umsetzung zwischen einer Wechselspannung und einer Gleichspannung zu bewirken.

Das Netzfilter kann eine reine Gleichtakt-Filterdrossel umfassen. Auf dieser kann für jede der Wechselspannungsphasen eine Wicklung angeordnet sein, wobei die Wicklungen gleichsinnig auf dem magnetischen Kern der Drossel angeordnet sind. Das Netzfilter kann aber auch eine gemeinsame Gleichtakt- und Gegentakt-Filterdrossel umfassen. Bei dem magnetischen Kern kann es sich um einen Ringkern oder einen E-Kern mit drei, vier oder fünf Schenkeln handeln. Das Netzfilter kann dafür zusätzlich Filterkondensatoren umfassen, wodurch eine L-C-Stufe gebildet ist. Auch eine L-C-L-Stufe ist möglich.

Gleichtakt-Störanteile führen zu einem wechselnden magnetischen Fluss durch den magnetischen Kern der Gleichtaktfilterdrossel und induzieren so ein Spannungssignal in der Messwicklung, dass proportional zu der über der Gleichtaktfilterdrossel abfallenden Gleichtakt-Spannung ist. Vorteilhaft ist das Spannungssignal dabei galvanisch getrennt und weist eine hohe Signal-Qualität (breitbandig) auf. Dieses Spannungssignal wird von der Steuereinrichtung erfasst und vorzugsweise digitalisiert verarbeitet.

Diese Verarbeitung besteh darin, basierend auf dem Signal von der Messwicklung ein Gleichtakt-Gegensignal zu berechnen. Das Gegensignal beeinflusst denjenigen Teil der Steuereinrichtung, der die Schaltsignale für die Halbleiterschalter bestimmt. Die Schaltsignale werden dabei so angewandelt, dass wenigstens ein Teil der Gleichtaktstörungen vermindert oder im Idealfall ganz unterdrückt wird.

Zweckmäßig werden die Gegensignale dabei so erzeugt, dass solche Anteile der Gleichtaktstörungen unterdrückt werden, deren Frequenz kleiner als die Hälfte der Schaltfrequenz der Halbleiterschalter für den Betrieb als Stromrichter ist. Beträgt die Schaltfrequenz beispielsweise 16 kHz, dann werden die Gegensignale so erzeugt, dass Gleichtaktstörungen mit Frequenz von unterhalb von 8 kHz vermindert werden. Dadurch werden die Schalthandlungen der Halbleiterschalter für den Betrieb als Stromrichter nicht oder nur unwesentlich gestört.

Vorteilhaft führt die Erfindung zu einer deutlichen Entlastung des Netzfilters, das dadurch kostengünstiger und mechanisch kleiner ausgelegt werden kann. Vorteilhaft wird dafür dem Stromrichter als Hardware lediglich die Messwicklung zugefügt, die die Gleichtakt-Spannungspegel über der Gleichtaktfilterdrossel des Netzfilters breitbandig erfasst. Hingegen werden dem Stromrichter keine Halbleiterschalter hinzugefügt, die die aktive Kompensation vornehmen, sondern es werden die Halbleiterschalter des Stromrichters mitverwendet.

Es wird also eine einfache, kostengünstige und effektive Lösung zur Reduktion der Gleichtakt-Störpegel geschaffen, mit der eine Überdimensionierung des Netzfilters aus Sicherheitsgründen nicht mehr erforderlich ist. Stattdessen kann ein Großteil der Gleichtakt-Störanteile, insbesondere jene unterhalb der halben Schaltfrequenz, durch die vorhandene Leistungselektronik selbst unterdrückt werden. Dabei ist vorteilhaft die einzige zusätzlich erforderliche Hardware die Messwicklung, die sich sehr einfach und kostengünstig realisieren lässt.

Vorteilhafte Ausgestaltungen der erfindungsgemäßen Stromrichteranordnung gehen aus den abhängigen Ansprüchen hervor. Dabei kann die Ausführungsform der unabhängigen Ansprüche mit den Merkmalen eines der Unteransprüche oder vorzugsweise auch mit denen aus mehreren Unteransprüchen kombiniert werden. Demgemäß können noch zusätzlich folgende Merkmale vorgesehen werden:
Die Gleichtakt-Filterdrossel kann so ausgestaltet sein, dass ihre Grenzfrequenz wenigstens 60% der Schaltfrequenz beträgt, insbesondere wenigstens 80% der Schaltfrequenz. Die Gleichtakt-Filterdrossel und somit der passive Teil des Gleichtaktfilters wird also so ausgelegt, dass seine Wirkung sich größtenteils erst ab Frequenzen entfaltet, die den besagten Teil der Schaltfrequenz betragen. Mit anderen Worten ist die Gleichtakt-Filterdrossel so ausgelegt, dass bei deutlich geringerer Frequenz liegende Anteile der Gleichtaktstörungen von den passiven Komponenten nicht oder nur geringfügig beeinflusst werden. Vorteilhaft wird hier ausgenutzt, dass solche Anteile der Gleichtaktstörungen von den durch die Steuereinrichtung veränderten Schalthandlungen der Halbleiterschalter unterdrückt werden, also aktiv abgeschwächt werden. Dadurch wird vorteilhaft erreicht, dass die passiven Komponenten kleiner und leichter aufgebaut werden können, da für eine höhere Grenzfrequenz kleinere Werte für die Induktivität und Kapazität ausreichen. Hierbei kann auch berücksichtigt werden, dass der Sättigungsstrom der Filterdrossel niedriger angesetzt werden kann. Besonders bei Gleichtakt-Störungen von relativ geringer Frequenz wie beispielsweise 2,5 kHz ist es hier besonders vorteilhaft, dass die Störungen aktiv unterdrückt werden, da diese Störungen leichter zu einer Sättigung der Filterdrossel führen als hochfrequente Störungen.

Die Messwicklung kann genau eine Windung aufweisen. Eine einzelne Windung kann unproblematisch und platzsparend auf dem Kern der Gleichtaktdrossel integriert werden und erlaubt somit einen einfachen Aufbau der Gleichtaktdrossel mit integrierter Messwicklung. Die Messwicklung kann im einfachsten Fall aus nur einer Windung von dünnem Schaltdraht bestehen.

Alternativ kann die Messwicklung auch mehrere Windungen aufweisen. Die Windungszahl wird vorzugsweise so gewählt, dass die induzierte Spannung optimal zu dem möglichen Eingangsspannungsbereich der Steuerungseinrichtung passt. Die Messwicklung kann dabei konzentriert an einer Stelle des magnetischen Kerns oder über den Kern verteilt gelegt werden.

Handelt es sich bei der Filterdrossel um eine kombinierte Gleich- und Gegentaktdrossel, dann ist es zweckmäßig, die Messwicklung auf dem magnetischen Kern verteilt anzuordnen, damit Gegentaktstörungen sich aufheben und nur ein Gleichtaktsignal auf der Messwicklung ankommt und von der Steuereinrichtung aufgenommen wird.

Der Stromrichter kann ein Wechselrichter oder ein aktiver Gleichrichter sein. Der Stromrichter hat also auf einer Seite Gleichspannungsanschlüsse und zur anderen Seite Wechselspannungsanschlüsse. Der Stromrichter kann dabei für einphasigen oder mehrphasigen Wechselstrom ausgestaltet sein, beispielsweise mit zwei oder mit drei oder mehr Wechselspannungsanschlüssen.

In der Eigenschaft als aktiver Gleichrichter kommt der Stromrichter beispielsweise als Eingangsstufe für eine Stromversorgung eines Geräts zum Einsatz, das als Verbraucher an ein Versorgungsnetz angeschlossen ist, wobei das Versorgungsnetz ein Wechselspannungsnetz ist. Beispielsweise kann der aktive Gleichrichter zusammen mit einem Gleichspannungszwischenkreis und einem Wechselrichter eine Ansteuerung für einen Elektromotor ausbilden.

In der Eigenschaft als Wechselrichter kommt der Stromrichter beispielsweise als abschließendes Element eines Geräts zum Einsatz, das eine Einspeisung in ein Versorgungsnetzwerk vornimmt.

Die beiden Möglichkeiten schließen sich dabei gegenseitig nicht aus und der Stromrichter kann je nach aktueller Betriebssituation für beide Leistungsfluss-Richtungen ausgelegt sein.

Die Steuereinrichtung ist bevorzugt ausgestaltet, Anteile des Messsignals zu ermitteln, deren Frequenz nicht höher ist als die Hälfte der Schaltfrequenz. Hierdurch werden zweckmäßig diejenigen Anteile der Gleichtaktstörungen ermittelt, die durch eine Anpassung der Schalthandlungen der Halbleiterschalter zumindest teilweise ausgeglichen werden können. Die Anteile können beispielsweise durch eine spektrale Auswertung des Messsignals, insbesondere mittels einer Fast-FourierTransformation, oder durch eine digitale Filterung ermittelt werden.

Die Steuereinrichtung kann ausgestaltet sein, anhand des Signals der Messwicklung zu ermitteln, ob die Gleichtakt-Störungen einen Schwellwert überschreiten und in diesem Fall eine Maßnahme zu ergreifen, wobei die Maßnahme insbesondere darin besteht, ein Signal auszugeben oder eine Selbstabschaltung vorzunehmen. Die Steuereinrichtung prüft mit anderen Worten, ob die Unterdrückung durch die Anpassung der Schaltsignale erfolgreich und ausreichend ist. Dabei kommt zum Tragen, dass die Messwicklung stets die Summe aus den Gleichtaktstörungen und den durch die Steuereinrichtung bewirkten Gegensignalen aufnimmt. Es kann also anhand des Spannungssignals von der Messwicklung abgeschätzt werden, ob das Gleichtakt-Gegensignal zu einer ausreichenden Kompensation geführt hat oder ob die Gleichtakt-Filterdrossel beispielsweise überlastet ist, also in die magnetische Sättigung getrieben wird.

Hierbei ist es möglich, nur den Pegel der Gleichtaktstörungen zu prüfen, die auch durch die Steuereinrichtung unterdrückt werden, d.h. solche mit ausreichend geringer Frequenz. Alternativ kann der Pegel sämtlicher Gleichtaktstörungen geprüft werden. Überschreitet der Pegel einen Schwellwert, sorgt die Maßnahme vorteilhaft dafür, dass das Problem nicht verborgen bleibt. Insbesondere kann in einem kritischen Arbeitsumfeld eine Störungsmeldung oder die Selbstabschaltung dafür sorgen, dass der Weiterbetrieb anderer Infrastruktur nicht gefährdet wird.

Weiterhin kann die Steuereinrichtung ausgestaltet sein, das Ergebnis der Auswertung anderen Softwarefunktionen oder anderen Geräten wie einer übergeordneten Steuerung zur Verfügung gestellt werden, um zusätzliche Sicherheitsfunktionen zu realisieren. Hierdurch eignet sich die Stromrichteranordnung besonders für spezielle Arbeitsumgebungen, in denen besondere Sicherheitsanforderungen erfüllt werden müssen, insbesondere der medizinische Bereich oder andere Umgebungen, in denen es zwingend erforderlich ist, dass parallel betriebene Geräte nicht durch Netzstörungen beeinflusst werden.

Die Halbleiterschalter des Stromrichters können SiC-basierte Schalter oder GaN-basierte Schalter sein (SiC = Siliziumkarbid, GaN = Galliumnitrid). Diese Schalter erlauben vorteilhaft einen Betrieb bei höheren Schaltfrequenzen, als das mit IGBTs der Fall ist. So kann die Schaltfrequenz bei einem Stromrichter mit SiC- oder GaN-Schaltern beispielsweise 50 kHz, 100 kHz oder mehr betragen.

Liegt die Schaltfrequenz der Halbleiterschalter derart hoch, dann ist es vorteilhaft möglich, Gleichtaktstörungen mit entsprechend erweitertem Frequenzbereich zu unterdrücken, da Störungen bis zur halben Schaltfrequenz durch angepasste Schaltsignale unterdrückbar sind. Bei einer Schaltfrequenz von 100 kHz können also Gleichtaktstörungen von bis zu 50 kHz mit einem Gegensignal wenigstens teilweise kompensiert werden. Besonders vorteilhaft ist es dadurch möglich, die Grenzfrequenz des passiven Gleichtaktfilters entsprechend hoch anzusetzen. Der Gleichtaktfilter kann beispielsweise ausgestaltet sein, dass seine Grenzfrequenz wenigstens 25 kHz oder wenigstens 40 kHz oder wenigstens 50 kHz beträgt. Je höher die Grenzfrequenz, desto kleiner und leichter fallen die induktiven und kapazitiven Komponenten des Netzfilters aus.

Im Folgenden wird die Erfindung anhand der in den Figuren dargestellten Ausführungsbeispiele näher beschrieben und erläutert. Es zeigen:
Figur 1 ein schematisches Schaltbild eines aktiven Gleichrichters, der an ein Versorgungsnetzwerk angeschlossen ist,
Figur 2 eine Ringkern-Gleichtaktdrossel mit einer Messwicklung mit einer einzigen Windung,
Figur 3 eine Ringkern-Gleichtaktdrossel mit einer verteilten Messwicklung,
Figur 4 eine kombinierte Gleichtakt- und Gegentakt-Filterdrossel mit einer Messwicklung.

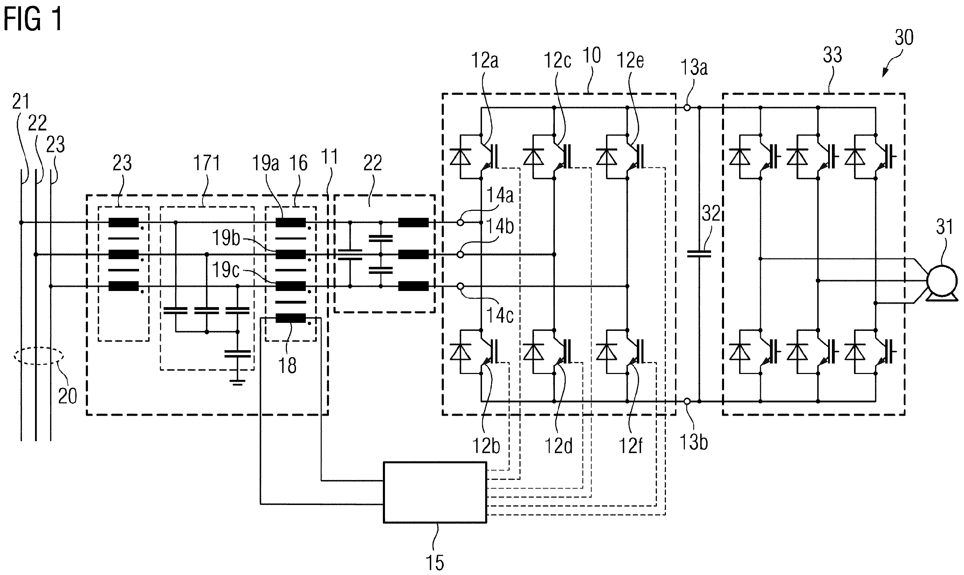

Figur 1 zeigt ein elektrisches Schaltbild für ein Ausführungsbeispiel für die Erfindung. Ein aktiver Gleichrichter 10 mit einem Netzfilter, das ein Gleichtaktfilter 11 und ein nicht näher betrachtetes Gegentaktfilter 22 umfasst, verbindet ein Versorgungsnetz 20 mit einem Verbraucher 30. Der Verbraucher 30 kann ein resistiver Verbraucher sein, kann aber auch kapazitiv, induktiv oder gemischt sein. In diesem Ausführungsbeispiel umfasst der Verbraucher 30 einen Gleichspannungs-Zwischenkreis mit einem Zwischenkreis-Kondensator 32 und einen dreiphasigen Wechselrichter 33, der analog zum aktiven Gleichrichter 10 aufgebaut ist. Zusammen bilden der Wechselrichter 33, der Gleichspannungs-Zwischenkreis und der aktive Gleichrichter 10 einen Umrichter. Der Umrichter speist in diesem Beispiel einen industriellen Motor 31, der somit auch Teil des Verbrauchers 30 ist.

Aus Sicht des Versorgungsnetzes 20 stellt der gesamt angeschlossene Aufbau einen Verbraucher dar, aber in diesem Beispiel liegt das Augenmerk auf dem aktiven Gleichrichter 10 und dem Netzfilter, daher werden diese für diese Beschreibung nicht als Teil des Verbrauchers 30 bezeichnet.

Das Versorgungsnetz 20 ist ein dreiphasiges Netzwerk, an das Verbraucher wie der Verbraucher 30 zum Zweck der Stromversorgung angeschlossen werden können, beispielsweise das öffentliche 400V-Versorgungsnetz.

Der aktive Gleichrichter 10 umfasst in diesem Ausführungsbeispiel sechs Halbleiterschalter 12a...f, beispielsweise IGBTs oder MOSFETs. Die Halbleiterschalter 12a...f bilden paarweise Halbbrücken. Die drei so gebildeten Halbbrücken sind parallelgeschaltet, wobei ein jeweiliger Mittelanschluss über das Gleichtaktfilter 11 an eine der Phasen 21...23 des Versorgungsnetzes 20 angeschlossen ist und die beiden Außenanschlüsse Gleichspannungsanschlüsse 13a, 13b bilden.

Eine Steuereinrichtung 15 ist mit den Steuerkontakten der Halbleiterschalter 12a...f verbunden und erzeugt Schaltsignale für die Halbleiterschalter 12a...f. Die Schaltsignale sind so gestaltet, dass durch das Schalten der Halbleiterschalter 12a...f eine Umsetzung zwischen der Gleichspannung an den Gleichspannungsanschlüssen 13a, 13b und der Wechselspannung passiert. Beispielsweise kann das durch eine geeignete Form der Pulsweitenmodulation passieren. Die Leistungsflussrichtung ist in diesem Beispiel vom Versorgungsnetz 20 zum Verbraucher 30, kann aber in anderen Beispielen auch umgekehrt oder variabel sein.

Die von der Steuereinrichtung 15 erzeugten Schaltsignale haben dabei eine Frequenz, die in vielen Ausführungsformen konstant ist. Je nach Typ der verwendeten Halbleiterschalter 12a...f kann die Schaltfrequenz beispielsweise 10 kHz oder 16 kHz betragen. Bei der Verwendung von SiC- oder GaN-basierten Schaltern kann die Schaltfrequenz auch eine höhere Frequenz wie beispielsweise 50 kHz, 80 kHz, 100 kHz oder mehr sein. In anderen Ausgestaltungen kommt eine variable Schaltfrequenz zum Einsatz. Beispielsweise kann die Schaltfrequenz in Bereichen des Stromnulldurchgangs erhöht sein gegenüber den Bereichen der Strompeaks. In diesem Fall hat die Schaltfrequenz zumindest einen minimalen Wert, der im laufenden Betrieb nicht unterschritten wird.

Das Gegentaktfilter 22 umfasst eine Gegentakt-Filterdrossel mit Wicklungen für jede der Phasen und Gegentakt-Kondensatoren, die zwischen die Phasen geschaltet sind.

Das Gleichtaktfilter 11 umfasst eine Gleichtakt-Filterdrossel 16 und eine Anordnung von Gleichtakt-Kondensatoren 171, bei denen je ein Kondensator von jeder der Phasen zu einem gemeinsamen Anschlussknoten verbunden ist und von diesem aus ein weiterer Kondensator zu Erde geschaltet ist. Die in Figur 1 gezeigte Anordnung der Gleichtakt-Kondensatoren 171 ist zweckmäßig, wenn die Gleichtakt-Filterdrossel 16 eine nennenswerte Gegentakt-Induktivität aufweist. Andernfalls kann auch eine Anordnung verwendet werden, bei der die Kondensatoren direkt zwischen eine jeweilige Phase und Erde geschaltet sind und der gemeinsame Anschlussknoten und der vierte Kondensator entfallen. Die Gleichtakt-Filterdrossel 16 umfasst drei gleichsinnig auf einem magnetischen Kern 41 angeordnete Wicklungen 19a...c. Die Wicklung sind in jeweils eine der Phasen 21...23 seriell zwischen einen jeweiligen Wechselspannungsanschluss 14a...c des aktiven Gleichrichters 10 und das Versorgungsnetz 20 geschaltet.

Figur 1 zeigt eine zweite, kleine, Gleichtakt-Filterdrossel 23 direkt am Netzeingang. Diese ist optional und wird nur dann benötigt, falls die Kombination aus Gleichtakt-Filterdrossel 16 und Gleichtakt-Kondensatoren 171 in einem (meist hohen) Frequenzbereich keine ausreichende Dämpfung besitzen oder aus wirtschaftlichen/platztechnischen Gründen.

Die Gleichtakt-Filterdrossel 16 umfasst weiterhin eine auf demselben magnetischen Kern 41 angeordnete Messwicklung 18. Die Anschlüsse der Messwicklung sind direkt oder indirekt mit der Steuereinrichtung 15 verbunden, sodass die Steuereinrichtung 15 der Messwicklung 18 ein Messsignal entnehmen kann, das der Spannung in der Messwicklung 18 entspricht und dadurch ein Maß für die aktuell vorliegenden Gleichtaktstörungen ist. Die Messwicklung 18 ist dafür so auf den Kern 41 aufgebracht, dass in ihr nur die Flussanteile eine Spannung induzieren, die von der Gleichtaktstörung hervorgerufen werden.

Die Steuereinrichtung 15 ist ausgestaltet, das der Messwicklung 18 entnommene Messsignal nachzubearbeiten, indem eine spektrale Filterung vorgenommen wird, beispielsweise mittels einer FFT. Diese Filterung entnimmt dem ermittelten Signal jene Anteile, deren Frequenz nicht höher ist als die Hälfte der geringsten oder einzigen Schaltfrequenz, die für die Halbleiterschalter 12a...f verwendet wird. Höherfrequente Anteile des Messsignals hingegen werden verworfen.

Aus den durch diese Auswertung erhaltenen Messsignalen kann abgelesen werden, ob Gleichtaktstörungen mit einer Frequenz von nicht mehr als der Hälfte der Schaltfrequenz vorliegen. Ist das der Fall, werden die Messsignale dazu verwendet, die erzeugten Schaltsignale so zu verändern, dass die Gleichtakt-störungen durch veränderte Schalthandlungen der Halbleiterschalter 12a...f ausgeglichen werden.

Mit anderen Worten erfasst die Steuereinrichtung 15 selbst die Pegel der Gleichtaktstörungen und passt durch eine geringfügige Erweiterung ihrer Regelstruktur die Schaltmuster der Leistungshalbleiter 12a...f so an, dass diese selbst eine Gegensignal zu den von den Verbrauchern kommenden Gleichtakt-Störanteilen einprägt. Im Gegensatz zu bekannten Lösungen wird hier keine zusätzliche Leistungsstufe zur aktiven Gleichtakt-Unterdrückung verwendet und eingebaut, sondern durch geschickte Ansteuerung der vorhandenen Halbleiterschalter 12a...f direkt ein passendes Gegensignal für niederfrequente Störanteile erzeugt.

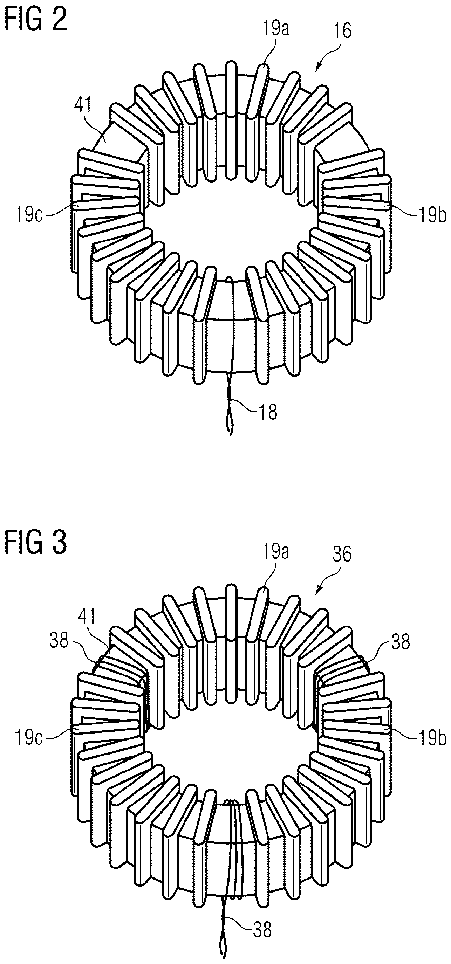

Die Figuren 2 und 3 zeigen Ausführungsbeispiele für die Gleichtakt-Filterdrossel 16, 36. In diesen Beispielen ist der magnetische Kern 41 als Ringkern ausgeführt. Die Wicklungen 19a...c sind gleichmäßig auf dem Kern 41 verteilt und gleichsinnig angeordnet.

In dem Ausführungsbeispiel gemäß Figur 2 umfasst die Messwicklung 18 eine einzige Windung, die in einem Bereich zwischen zwei der Wicklungen 19a...c um den magnetischen Kern 41 gelegt ist. Die Messwicklung 18 besteht dabei aus einfachem Schaltdraht. Durch den Aufbau der Gleichtakt-Filterdrossel 16 ist gewährleistet, dass Gegentakt-Störungen im Wesentlichen kein Magnetfeld aufbauen und somit kein Messsignal in der Messwicklung 18 verursachen. Messsignale in der Messwicklung 18 stammen daher von Gleichtakt-Störungen.

In dem Ausführungsbeispiel gemäß Figur 3 ist die Messwicklung 38 verteilt auf dem magnetischen Kern 41 angeordnet. Sie umfasst drei Wicklungsbereiche mit jeweils mehreren Windungen. Diese sind kurz in Serie geschaltet, indem der Schaltdraht nah am Kern 41 innerhalb der Wicklungen 19a...c entlanggeführt ist. Alternativ kann hier die Verschaltung auch auf einer darunterliegenden Leiterplatte erfolgen. Auch hier ist schon durch den Aufbau der Gleichtakt-Filterdrossel 36 gewährleistet, dass nur Gleichtakt-Störungen ein Messsignal in der Messwicklung 38 verursachen.

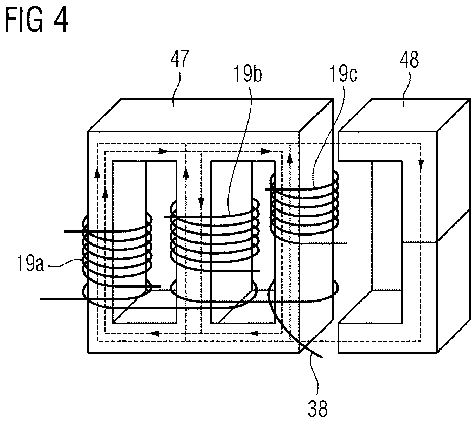

Figur 4 zeigt eine Ausführungsform, bei der die Filterdrossel 46 eine gemeinsame Gleich- und Gegentakt-Filterdrossel ist. Bei dem Gleichtakt-Filter 11 handelt es sich in diesem Beispiel also auch um ein kombiniertes Gleichtakt- und Gegentakt-Filter. Der magnetische Kern 47 ist hierbei ebenfalls ein E-Kern. Er umfasst einen ersten Teil 48 und einen zweiten Teil 49. Der erste Teil 48 umfasst die Wicklungen 19a...c, die gleichsinnig auf den drei Schenkeln angeordnet sind. Durch die Anordnung der Wicklungen 19a...c und den zusätzlichen Arm, der durch den zweiten Teil 49 dargestellt wird, erlaubt der magnetische Kern 47 geschlossene magnetische Kreise sowohl für Gleichtakt- als auch für Gegentakt-Störungen.

Die Messung der Gleichtaktstörungen kann speziell bei der Form des Kerns 47 nicht mehr mit einer einzelnen Windung an einer Stelle des Kerns 47 erfolgen. Vielmehr wird hier eine Messwicklung 38 verwendet, wie sie schon in Figur 3 dargestellt ist. Die Messwicklung 38 ist dabei verteilt auf dem ersten Teil 48 angeordnet, wobei gleiche Windungszahlen auf jedem der drei Arme vorhanden sind. Die Teile der Messwicklung 38 sind wieder in Reihe geschaltet. Gegentakt-Anteile der Störungen heben sich durch die Anordnung der Messwicklung 38 auf und resultieren nicht in einem Messsignal. Gleichtakt-störungen hingegen heben sich nicht auf, sondern erzeugen ein Messsignal, das durch die Steuereinrichtung verwendet wird, um die Gleichtaktstörungen zu unterdrücken.

### Bezugszeichen

- 10: aktiver Gleichrichter
- 11: Gleichtaktfilter
- 12a...f: Halbleiterschalter
- 13a, b: Gleichspannungsanschlüsse
- 14a...c: Wechselspannungsanschlüsse
- 15: Steuereinrichtung
- 16, 36: Gleichtakt-Filterdrossel
- 17a...c: Gegentakt-Kondensatoren
- 171: Gleichtakt-Kondensatoren
- 18: Messwicklung
- 19a...c: Wicklungen
- 20: Versorgungsnetz
- 22: Gegentaktfilter
- 23: zweite Gleichtakt-Filterdrossel
- 30: Verbraucher
- 31: Motor
- 32: Zwischenkreis-Kondensator
- 33: Wechselrichter
- 38: verteilte Messwicklung
- 46: Gleich- und Gegentaktfilterdrossel
- 47: Kern
- 48: erster Teil
- 49: zweiter Teil

## Patentansprüche

1. Stromrichter (10), umfassend:
- eine Mehrzahl von Halbleiterschaltern (12a...f), die ein Netzwerk bilden,
- eine Steuereinrichtung (15), ausgestaltet zur Erzeugung von Schaltsignalen mit einer Schaltfrequenz für die Halbleiterschalter (12a...f), wobei die Schaltsignale einen Betrieb des Netzwerks als Stromrichter bewirken,
- ein mit dem Netzwerk verbundenes Netzfilter (11) zur Filterung von Gleichtakt-Störungen mit einer Filterdrossel (16, 36, 46), wobei die Filterdrossel (16, 36, 46) eine Mehrzahl von in den Laststrompfad geschalteten Wicklungen (19a...c) und eine Messwicklung (18, 38) umfasst,
wobei die Steuereinrichtung (15) ausgestaltet ist,
- ein Messsignal von der Messwicklung (18, 38) aufzunehmen, wobei das Messsignal ein Maß für Gleichtakt-Störungen ist,
- die Schaltsignale für die Halbleiterschalter (12a...f) derart zu erzeugen, dass Gleichtakt-Störungen mit einer Frequenz von weniger als der Hälfte der Schaltfrequenz vermindert werden.

2. Stromrichter (10) nach Anspruch 1, bei der die Steuereinrichtung (15) ausgestaltet ist, Anteile des Messsignals zu ermitteln, deren Frequenz nicht höher ist als die Hälfte der Schaltfrequenz.

3. Stromrichter (10) nach Anspruch 1 oder 2, bei der die Steuereinrichtung (15) ausgestaltet ist, anhand des Signals der Messwicklung (18, 38) zu ermitteln, ob die Gleichtakt-Störungen einen Schwellwert überschreiten und in diesem Fall eine Maßnahme zu ergreifen, wobei die Maßnahme insbesondere darin besteht, ein Signal auszugeben oder eine Selbstabschaltung vorzunehmen.

4. Stromrichter (10) nach einem der vorangehenden Ansprüche, bei der die Messwicklung (18, 38) genau eine Windung aufweist.

5. Stromrichter (10) nach einem der Ansprüche 1 bis 3, bei der die Messwicklung (38) verteilt auf dem magnetischen Kern (47) der Filterdrossel (16, 36, 46) angeordnet ist.

6. Stromrichter (10) nach einem der vorangehenden Ansprüche, bei der die Filterdrossel (16, 36) eine Gleichtakt-Filterdrossel (16, 36) ist.

7. Stromrichter (10) nach einem der Ansprüche 1 bis 5, bei der die Filterdrossel (46) eine kombinierte Gleich- und Gegentaktdrossel (46) ist.

8. Stromrichter (10) nach einem der vorangehenden Ansprüche, bei der die Filterdrossel (16, 36, 46) so ausgestaltet ist, dass ihre Grenzfrequenz wenigstens 60 % der Schaltfrequenz beträgt, insbesondere wenigstens 80% der Schaltfrequenz.

9. Stromrichter (10) nach einem der vorangehenden Ansprüche, bei der die Halbleiterschalter (12a...f) SiC-basierte Schalter oder GaN-basierte Schalter sind.

10. Stromrichter (10) nach Anspruch 9, bei der die Schaltfrequenz wenigstens 50 kHz beträgt, insbesondere wenigstens 100 kHz.
